# FASCICULE DE BREVET EUROPEEN

(11) **EP 3 759 394 B1**
(45) Date de publication et mention de la délivrance du brevet: **24.01.2024**
(21) Numéro de dépôt: 19717522.7
(22) Date de dépôt: 28.02.2019
(51) Int. Cl.: F23R 3/00, F23R 3/50

(54) **CHAMBRE DE COMBUSTION A FOND DE CHAMBRE DOUBLE**
BRENNKAMMER MIT DOPPELKAMMERBODEN
COMBUSTION CHAMBER HAVING A DOUBLE CHAMBER BOTTOM

(30) Priorité: 28.02.2018 FR 1851784
(43) Date de publication de la demande: 06.01.2021
(73) Titulaire: SAFRAN AIRCRAFT ENGINES, 75015 Paris (FR)
(72) Inventeur: BUNEL, Jacques, Marcel, Arthur, 77550 MOISSY-CRAMAYEL (FR); JOORY, Dan, Ranjiv, 77550 MOISSY-CRAMAYEL (FR)
(74) Mandataire: Ernest Gutmann - Yves Plasseraud S.A.S.
(86) Numéro de dépôt international: PCT/FR2019/050467
(87) Numéro de publication internationale: WO 2019/166745

(56) Documents cités:
- EP-A1- 1 818 615
- EP-A1- 2 012 061
- EP-A1- 2 012 062
- EP-A1- 3 252 378
- GB-A- 2 247 522
- US-A- 5 623 827
- US-A- 6 164 074
- US-A1- 2014 090 402
- US-A1- 2015 107 109

## Description

### PRESENTATION

La présente invention concerne une chambre de combustion pour une turbomachine à gaz, telle qu'un turboréacteur ou un turbopropulseur d'aéronef.

Dans ce domaine sont connues des chambres de combustion comportant :
- deux parois (radialement) interne et externe respectivement, et
- un fond de chambre (FDC) comprenant une paroi amont et une paroi aval s'étendant entre lesdites parois interne et externe et comprenant chacune des ouvertures de montage (c'est-à-dire configurées pour permettre un montage) de dispositifs d'injection de carburant pour injecter du carburant à travers lesdites ouvertures.

FR 2 998 038 divulgue une telle chambre de combustion. EP 3 252 378 décrit une turbomachine à gaz ayant les caractéristiques selon le préambule de la revendication 1.

L'espace ou enceinte situé entre les parois amont et aval de fond de chambre est alimenté en air via des trous de multi-perforations, afin d'assurer un refroidissement par impact de la paroi aval, laquelle est directement exposé au rayonnement de la flamme. L'air est ensuite éjecté par des fentes ou des trous en direction des parois interne et externe afin d'amorcer un film d'air qui est ensuite relayé par les trous multi-perforations de ces parois.

La paroi aval de fond de chambre qui est directement exposée au rayonnement dans cette configuration est ainsi soumise à des contraintes thermiques fortes qui vont au fil des cycles de fonctionnement la déformer et ne plus lui permettre d'assurer de façon satisfaisante sa fonction principale vis-à-vis de la paroi amont, d'autant qu'antérieurement, il était fréquent de protéger thermiquement le fond de chambre de combustion par une couronne de déflecteurs montée dans la chambre, directement en aval de la paroi de fond. Sans ces déflecteurs ni une tenue thermique suffisante dans le temps de la paroi aval, le fond de chambre va (trop) rapidement voir son intégrité altérée.

Des jeux peuvent apparaitre, qui génèrent des problèmes de pollution, de consommation de carburant, et de rallumage de la chambre en cas d'extinction. L'ajout d'un système de sécurité du type « fail safe » (sécurité-défaut) est en outre une solution inadaptée, qui alourdit la chambre de combustion.

L'invention a donc notamment pour but d'apporter une solution simple, efficace et économique à une partie au moins de ces problèmes et inconvénients, en visant l'atteinte au moins partiel des objectifs suivants par rapport à l'art antérieur par exemple de FR 2 998 038 :
- amélioration de la durée de vie de la chambre de combustion, dans le cadre d'une technologie de FDC à double peau,
- réduction des fuites gazeuses parasites sur le FDC équipé,
- réduction de la pollution,
- réduction de la consommation de carburant,
- amélioration des conditions d'allumage et de rallumage de la chambre,
- augmentation de la ventilation sur la pièce (paroi aval) directement exposée au rayonnement de la flamme.

Aussi est-il proposé que la paroi aval de fond de la chambre de combustion soit sectorisée, et que, pour un appui sur la paroi amont, la paroi aval comprenne :
- en périphérie externe, un rebord annulaire amont, tourné vers l'amont, et,
- en périphérie interne, un rebord annulaire amont, tourné vers l'amont.

Ainsi, en présentant tant angulairement des secteurs successifs que des rebords annulaires amont, cette paroi aval de fond pourra se déformer et/ou absorber des contraintes, indépendamment de la paroi amont et d'un secteur angulaire à un autre.

Pour, outre une maîtrise de certaines déformations et/ou une absorption de contraintes, comme la paroi aval, mais aussi une possible fixation facilitée des deux dites parois amont/aval et des dispositifs d'injection de carburant montés, il est proposé que la paroi amont comprenne :
- en périphérie externe, un rebord annulaire amont, tourné vers l'amont, de fixation à une extrémité amont de la paroi externe, et,
- en périphérie interne, un rebord annulaire amont, tourné vers l'amont, de fixation à une extrémité amont de la paroi interne.

Pour par ailleurs stabiliser, simplifier et sécuriser (absence de fixation traversante et de liaison soudée, jugée finalement trop aléatoire, étanchéité) la paroi aval pourra être montée précontrainte radialement, assurant ainsi une étanchéité entre les rebords annulaires amont respectifs de ladite paroi aval et de la paroi amont, au niveau desdites périphéries interne et externe.

Subsidiairement, lesdites parois amont et aval pourront être métalliques et sensiblement cylindriques, ce qui veut dire cylindriques pour certaines au moins d'entre elles, à 10° près.

En effet, la solution précitée de sectorisation doit permettre d'éviter une fabrication en CMC ou autre solution en matériau réfractaire.

Par ailleurs cette solution de sectorisation doit permettre que, sectorisée, la paroi aval puisse définir une protection thermique pour la paroi amont, ladite paroi amont étant elle-même structurelle pour la chambre de combustion, c'est-à-dire étant celle des deux parois de fond par laquelle transitent principalement les efforts à passer entre le fond de chambre et lesdites parois interne et externe qui entourent la zone où se développent les flammes dans la chambre de combustion.

D'autant plus avec un choix de paroi amont structurelle, ladite paroi amont est vissée avec les parois interne et externe, respectivement, les efforts passant alors par ces vis.

Pour renforcer encore les avantages précités liés aux déformations et/ou absorption des contraintes, il est proposé que la paroi aval soit en appui sous contrainte sur la paroi amont.

De la sorte, notamment pas de soudage ni brasage ; et des mouvements relatifs d'autant plus favorisés avec la sectorisation de la paroi aval.

Pour d'ailleurs favoriser encore résistance thermique et mécanique, il est par ailleurs proposé que la paroi amont présente globalement une épaisseur égale, à 10% près, ou supérieure à l'épaisseur de la paroi aval.

Ceci renvoie au choix évoqué de paroi amont structurelle et à un montage fretté/serré de la paroi aval sur la paroi amont.

Encore pour favoriser de façon maîtrisée les mouvements relatifs impliquant la paroi aval et typiquement induits par des contraintes thermiques, il est proposé qu'un dit secteur de la paroi aval recouvre un secteur circonférentiellement adjacent de la paroi aval.

Ainsi, un guidage en dilatation pourra être obtenu.

A ce sujet, il est même proposé qu'au moins une déformation circonférentielle à chaud desdits secteurs de la paroi aval, considérés individuellement, soit prédéfinie (de construction/fabrication) et que le recouvrement circonférentiel par un dit secteur d'un dit secteur adjacent de la paroi aval soit alors supérieur à ladite déformation prédéfinie.

Ainsi, on réduira encore les risques de fuites et de faiblesse structurelle.

Concernant les positions de montage, il est proposé :
- que deux dites ouvertures, respectivement de ladite paroi amont et de ladite paroi aval, de montage d'un dit dispositif d'injection de carburant soient coaxiales, chaque ouverture de la paroi amont présentant un axe par rapport auquel un dit secteur de la paroi aval sera alors circonférentiellement (ou angulairement) centré, et/ou
- que les orifices précités de fixation par vissage de la paroi amont avec les parois interne et externe soient angulairement situés en regard des recouvrements circonférentiels.

Ainsi, on favorisera un équilibre dans le montage mais aussi dans la circulation prévisible des efforts et contraintes.

A chaud, turbomachine en fonctionnement, la paroi amont et les secteurs de paroi aval vont subir des températures différentes. Si chaque secteur de paroi aval est centré sur l'axe de la bouche de chaque système d'injection, en fonctionnement, chaque secteur de paroi aval suivra radialement la dilatation de la paroi amont et se dilatera tangentiellement. Les diamètres extérieur et intérieur de la couronne de la paroi aval pourront rester égaux à ceux de la paroi amont et pourront ainsi améliorer la durée de vie par rapport à une paroi aval - a priori annulaire - sur 360°.

A ce sujet, pour favoriser encore une maîtrise thermique du fond de chambre, il est aussi proposé que la paroi amont et la paroi aval comprennent chacune des passages (ci-après 139,239,243) d'air qui les traversent

Outre la chambre de combustion que l'on vient de présenter, est aussi concernée par l'invention une turbomachine à gaz pour aéronef équipée de cette chambre de combustion.

L'invention sera si nécessaire mieux comprise et d'autres détails, caractéristiques et avantages de l'invention pourront apparaître à la lecture de la description suivante faite à titre d'exemple non limitatif en référence aux dessins annexés où :
- la figure 1 est une demi-vue schématique en coupe axiale d'une chambre de combustion de turbomachine de l'art antérieur,
- la figure 2 est une vue identique d'une variante de fond de chambre d'une chambre de combustion de l'art antérieur qui peut remplacer le fond de chambre de la figure 1,
- la figure 3 est vue correspondant à la figure 2 et représentant un mode de réalisation de fond de chambre conforme à l'invention,
- la figure 4 est une vue schématique à plus grande échelle d'une partie de la figure 3,
- la figure 5 est une vue schématique en perspective de l'aval, dans le sens de la flèche V de la figure 3, des deux parois du fond de chambre, à imaginer ainsi sur 360°,
- la figure 6 est une vue schématique en perspective de l'amont, dans le sens de la flèche VI de la figure 5, et
- la figure 7 détaille la zone VII de la figure 6.

### DESCRIPTION DETAILLEE

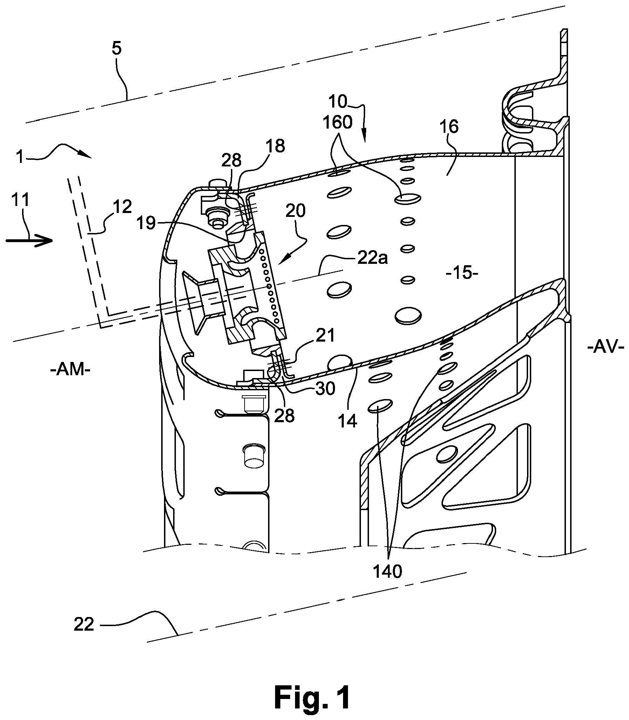

La figure 1 illustre une chambre de combustion 10 d'une turbomachine 1 à gaz pour aéronef conformément à l'art antérieur. La turbomachine 1 comporte, en amont (AM) par rapport au sens global de circulation des gaz dans la turbomachine (flèche 11) un compresseur non représenté dans lequel de l'air est comprimé avant d'être injecté par un conduit annulaire de diffusion dans un carter de chambre non représenté (traits fantômes 5), puis dans la chambre de combustion 10 montée dans ce carter. L'air comprimé est introduit dans la chambre de combustion 10 et mélangé à du carburant issu d'injecteurs 12. Les gaz issus de la combustion sont dirigés vers une turbine haute pression non représentée, située en aval (AV) de la sortie de la chambre 10. La chambre de combustion 10, qui est du type annulaire, comporte une paroi annulaire radialement interne 14 et une paroi annulaire radialement externe 16, dont les extrémités amont sont reliées par une paroi de fond 18 s'étendant sensiblement radialement. La paroi de fond 18 comporte une pluralité d'ouvertures 19 axiales configurées pour servir au montage de dispositifs 20 d'injection de carburant dans lesquels sont destinées à être engagées des têtes des injecteurs de carburant 12. Des trous, 140 et 160, de circulation d'air de dilution et/ou de refroidissement peuvent traverser les parois interne 14 et/ou externe 16, respectivement.

Les parois radialement interne 14 et radialement externe 16 peuvent être sensiblement coaxiales entre elles et parallèles aux axes, parallèles entre eux, 22 et 22a, l'axe 22a appartenant au plan de coupe et étant l'axe d'alignement du dispositif 20 d'injection de carburant représenté.

L'axe de référence est celui 22 autour duquel se développe annulairement la chambre de combustion 10. Est radial ce qui lui est sensiblement perpendiculaire.

Le fond de chambre de la chambre de combustion 10 comporte en outre des déflecteurs 21 montés en aval de la paroi de fond 18 et destinés à la protéger de la flamme formée dans la chambre de combustion 10, dans le volume 15 défini entre les parois 14,16. Les déflecteurs 21 sont disposés de façon adjacente par leurs bords radiaux, de manière à former une couronne annulaire de déflecteurs 21 protégeant la paroi de fond 18.

La paroi de fond 18 comporte des multiperforations 28 servant au passage d'air issu du compresseur et débouchant dans l'espace annulaire 30 ménagé entre la paroi de fond 18 et les déflecteurs 21. La ventilation de la paroi de fond 18 n'est donc pas homogène sur toute sa circonférence.

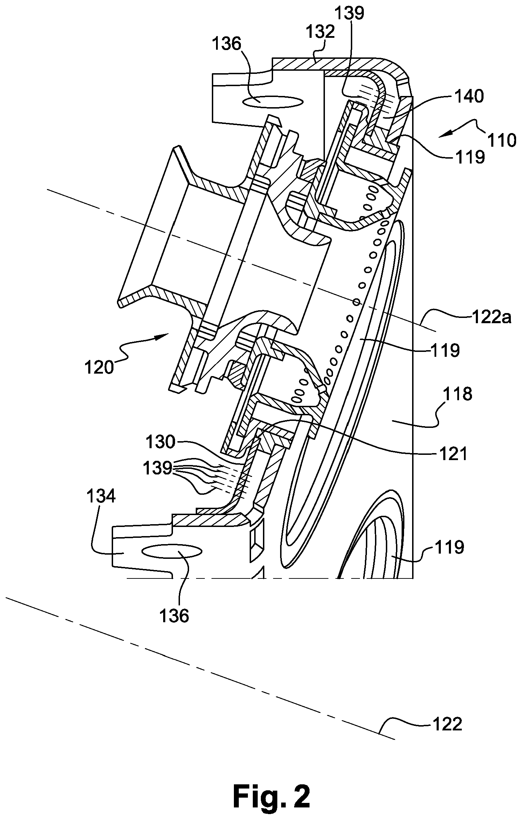

Le fond de chambre 110 de la figure 2 diffère du précédent notamment en ce qu'il ne comprend pas de déflecteur et comprend par contre une tôle 130 annulaire qui est montée en amont de la paroi aval 118, parallèlement et à distance de celle-ci. La paroi aval 118 de fond diffère de celle 18 ci-avant en ce qu'elle ne comprend pas de multiperforations. Comme la tôle amont 130, la paroi aval comprend, parallèlement à l'axe 122 de la chambre de combustion 10, une rangée annulaire d'ouvertures (respectivement 119,121) dans lesquelles sont montés les dispositifs d'injection 120, celui de la coupe étant centré sur l'axe 122a parallèle à l'axe 122, ces derniers correspondant aux axes 22a et 22, respectivement. La paroi aval 118 comprend à sa périphérie externe un rebord annulaire amont 132 (qui peut être sensiblement cylindrique) de fixation à l'extrémité amont de la paroi externe de la chambre, et à sa périphérie interne un rebord annulaire amont 134 (qui peut être sensiblement cylindrique) de fixation à l'extrémité amont de la paroi interne de la chambre. La fixation de ces parois est assurée par des moyens du type vis-écrou qui traversent des orifices radiaux 136 de ces parois.

Les parois amont et aval 130,118 délimitent entre elles une cavité annulaire 140 de circulation d'air. La paroi ou tôle amont 130 comprend des multiperforations 139 pour le passage d'air destiné à impacter la paroi aval 118 en vue de son refroidissement et à alimenter en air la cavité 140 s'étendant entre les parois amont et aval 130,118.

Pour chercher à surmonter une partie au moins des problèmes et inconvénients évoqués ci-avant, il est dans l'invention proposé que la paroi aval du fond de chambre soit sectorisée.

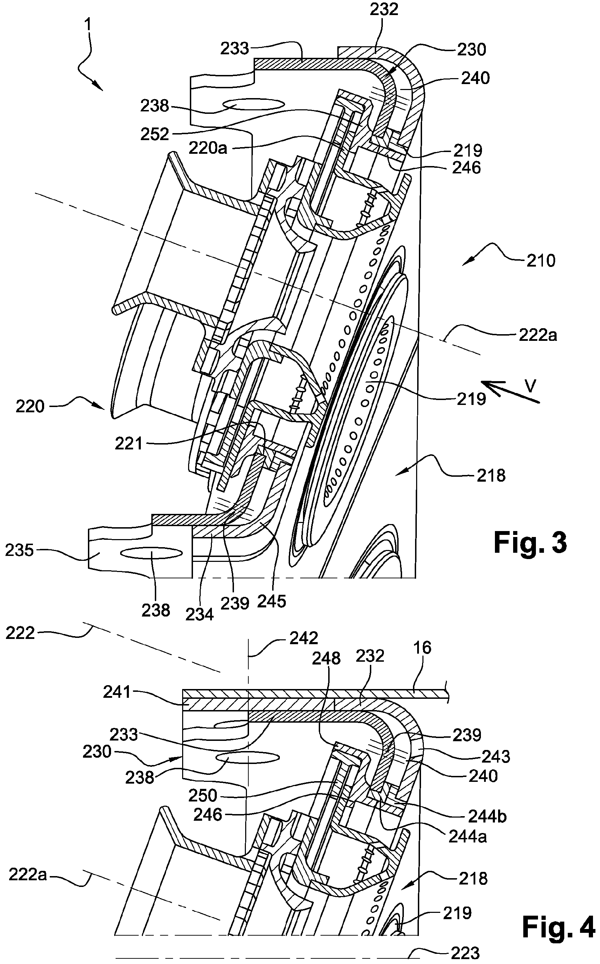

Sur les figures 3-7, qui illustrent un mode de réalisation de l'invention, les pièces identiques, et/ou fonctions identiques, à celles présentées en relation avec la figure 2 ont le même repère, augmenté de 100.

Plus précisément, en relation avec ces figures 3-7, l'invention prévoit donc un fond de chambre 210 comprenant une paroi amont 230 et une paroi aval 218 s'étendant entre lesdites parois annulaires interne et externe et comprenant des ouvertures respectives 221,219 de disposition, parallèle à l'axe 222 de la chambre, de dispositifs 220 d'injection de carburant pour injecter du carburant à travers lesdites ouvertures, et donc à travers une paroi aval 218 sectorisée.

Chambre de combustion 10 en fonctionnement, chaque secteur de paroi aval 218 aval va ainsi pouvoir suivre radialement la dilatation de la paroi amont 230 et va se dilater tangentiellement (circonférentiellement). Les parois amont et aval étant de préférence des couronnes, les diamètres extérieur et intérieur de la paroi aval 218 aval vont rester égaux à ceux de la paroi amont 230 et vont améliorer la durée de vie par rapport à une paroi aval qui serait une couronne continue sur 360°.

Tant la paroi amont 230 que la paroi aval 218 vont pouvoir être métalliques, typiquement un même acier.

La paroi de fond amont 230 comprend à sa périphérie externe un rebord annulaire amont 233 (qui peut être sensiblement cylindrique), tourné vers l'amont, de fixation à l'extrémité amont de la paroi externe 16 de la chambre, et à sa périphérie interne un rebord annulaire (tourné vers l') amont 235 (qui peut être sensiblement cylindrique) de fixation à l'extrémité amont de la paroi interne 14 (figure 1) de la chambre. La fixation de ces parois est assurée par des moyens du type vis-écrou qui traversent des orifices 238 de la paroi amont 230 radiaux à l'axe général 223 de la turbomachine à gaz 1. La paroi aval 218 comprend un rebord annulaire (tourné vers l') amont 232,234 (qui peut être sensiblement cylindrique) à chacune de ses périphéries externe et interne. Comme cela est visible en figures 3-4, le rebord externe 232 de la paroi aval 218 est en appui serré (fretté) radial à l'axe 223, sur une surface cylindrique externe du rebord 233 de la paroi amont 230, et son rebord interne 234 est de la même manière en appui serré sur une surface cylindrique interne du rebord 235 de la paroi amont 230. La paroi aval 218 aura de préférence été précontrainte radialement pour assurer une étanchéité entre ces rebords au niveau de leurs périphéries interne et externe.

Des entretoises percées ou rondelles 241, de l'épaisseur des rebords annulaires amont 232,234, peuvent être interposés entre les rebords annulaires 233,235 et les parois radialement interne 14 et radialement externe 16. Pour la fixation à ces parois interne et externe, les vis 242 passeront à travers les orifices 238 et les entretoises 241, mais donc sans traverser la paroi aval 218.

Les efforts et contraintes entre les parois 14,16 et le fond de chambre 210 vont alors passer par la paroi amont 230.

Pour un compromis entre protection thermique, montage fretté, masse et résistance mécanique, il est conseillé que la paroi amont 230 présente globalement une épaisseur qui soit égale, à 10% près, ou supérieure à l'épaisseur de la paroi aval 218.

Montée dans l'axe de l'orifice 221 de la paroi amont, et sectorisée comme indiqué ci-avant, la paroi aval 218 va pouvoir définir une protection thermique efficace pour la paroi amont 230, cette paroi amont étant donc structurelle pour la chambre de combustion.

La paroi amont 230 comprend des multiperforations 239 à travers lesquelles de l'air qui va impacter la paroi aval 218 en vue de son refroidissement et alimenter en air la cavité 240. Comme cela est visible en figures 3 ou 4, la paroi aval 218 peut comprendre une rangée annulaire externe de fentes 239 et une rangée annulaire interne de fentes 243 d'évacuation de l'air contenu dans la cavité 240. Les fentes 239,243 sont destinées à fournir un film d'air le long des parois externe et interne 16,14, respectivement, de la chambre.

Pour le montage des dispositifs d'injection 220, et comme cela est mieux visible en figure 4, une bague en deux parties 244a,244b est engagée dans chaque ouverture 219,221 et ferme intérieurement la cavité 240. Les parties 244a,244b sont brasés respectivement sur les pourtours des ouverture 219,221. Un fourreau 246 est monté dans la bague, coaxialement à celle-ci. Le fourreau 246 présente à sa périphérie externe un rebord cylindrique 248 orienté vers l'amont et sur lequel est destinée à être rapportée et fixée une rondelle 250 à rebords. Suivant l'axe local 222a, il existe entre la rondelle 250 et un rebord 252 intermédiaire du fourreau un espace annulaire dans lequel est logé et peut coulisser en direction radiale un rebord annulaire externe 220a d'un des dispositifs d'injection 220 afin de compenser des dilatations thermiques différentielles en fonctionnement. Les rondelles 250 sont rapportées et fixées sur les fourreaux 246.

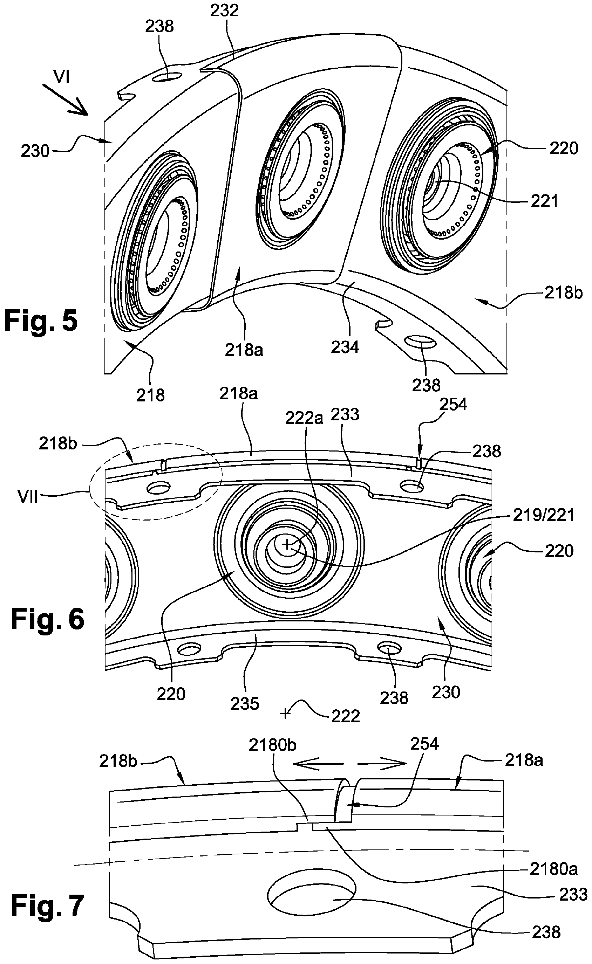

Pour éviter qu'en fonctionnement les dilatations circonférentielles de chaque secteur de paroi aval 218 aval puissent induire des défauts de protection de la paroi amont 230 et/ou des fuites de fluide, il est proposé que les secteurs de paroi aval 218 aval se recouvrent circonférentiellement (zone 254 figures 6-7). Un dit secteur, tel 218b figures 5-7, de la paroi aval pourra alors recouvrir un secteur circonférentiellement adjacent, tel 218a, de cette paroi. Ainsi, un rebord extérieur 2180b, circonférentiel ou latéral, d'un premier secteur 218b pourra alors recouvrir radialement un rebord intérieur 2180a, circonférentiel ou latéral, d'un second secteur 218a circonférentiellement adjacent. Un jeu (voir flèches figure 7) dans la direction circonférentielle existera alors entre les secteurs angulaires 218a,218b... Si les rebords sont en outre ouverts vers l'amont et l'aval, un léger déplacement relatif sensiblement axial entre les secteurs et par rapport à la paroi amont 230 pourra aussi intervenir ; voir figure 7.

Pour maîtriser au mieux le(s) jeu(x) à prévoir, il est par ailleurs proposé de prédéfinir, lors de la conception, la/les déformation(s) circonférentielle(s) à chaud attendue(s) de ces secteurs de la paroi aval 218. A partir de ces données de référence (en dimensions, voire en formes), on aura avantage à ce que le recouvrement 254 circonférentiel par un dit secteur (218b) d'un dit secteur adjacent (218a) de la paroi aval soit prédéfini comme supérieur à la déformation (au jeu) prédéfini(e).

Comme déjà mentionné, les parois amont et aval 218 sont, par secteur de paroi aval, traversées par des ouvertures coaxiales, par exemple celles 219/221 d'axe 222a figure 6. Dans cette ouverture double, est donc montée axialement l'un des dispositifs 220 d'injection de carburant dans (le volume 15 de) la chambre 10. Encore en liaison avec les dilatations différentielles précitées existant, turbomachine en fonctionnement, chaque secteur, tel 218a, sera favorablement circonférentiellement centré par rapport à l'axe (tel 222a) de l'ouverture 221 concernée de la paroi amont 230.

Et de manière comparable en termes d'effet mécanique, on pourra aussi trouver approprié que les (ou au moins certains des) orifices 238 de fixation par vissage de la paroi amont 230 avec les parois annulaires interne et externe soient angulairement (circonférentiellement) situés en regard des recouvrements 254 circonférentiels respectifs; voir figures 6-7.

## Revendications

1. Turbomachine à gaz comprenant une chambre de combustion (10), la chambre de combustion comprenant :
- deux parois interne (14) et externe (16) respectivement,
- un fond de chambre (210) comprenant une paroi amont (230) et une paroi aval (218) s'étendant entre lesdites parois interne et externe et comprenant chacune des ouvertures (221,219) de montage de dispositifs (220) d'injection de carburant pour injecter du carburant à travers lesdites ouvertures, la paroi aval étant sectorisée (218a,218b),
pour un appui sur la paroi amont (230), la paroi aval (218) comprend :
- en périphérie externe, un rebord annulaire amont (232), tourné vers l'amont, et,
- en périphérie interne, un rebord annulaire amont (234), tourné vers l'amont, **caractérisée en ce que** la paroi aval (218) est en appui sous contrainte sur la paroi amont (230) et la paroi amont (230) est vissée avec les parois interne (14) et externe (16) et comprend :
- en périphérie externe, un rebord annulaire amont (233), tourné vers l'amont, de fixation à une extrémité amont de la paroi externe (16), et,
- en périphérie interne, un rebord annulaire amont (235), tourné vers l'amont, de fixation à une extrémité amont de la paroi interne (14).

2. Turbomachine à gaz selon la revendication 1, dans laquelle :
- la turbomachine présente un axe général (223),
- le rebord annulaire amont (232) en périphérie externe de la paroi aval (218) est en appui serré radial audit axe (223) sur une surface cylindrique externe du rebord annulaire amont (233) en périphérie externe de la paroi amont (230), et,
- le rebord annulaire amont (234) en périphérie interne de la paroi aval (218) est en appui serré sur une surface cylindrique interne du rebord annulaire amont (235) en périphérie interne de la paroi amont (230).

3. Turbomachine à gaz selon l'une quelconque des revendications précédentes, dans laquelle les rebords annulaires sont cylindriques.

4. Turbomachine à gaz selon l'une quelconque des revendications précédentes, dans laquelle les parois amont (230) et aval (218) sont métalliques.

5. Turbomachine à gaz selon l'une quelconque des revendications précédentes, dans laquelle la paroi aval (218) définit une protection thermique pour la paroi amont (230), ladite paroi amont étant structurelle pour la chambre de combustion.

6. Turbomachine à gaz selon l'une quelconque des revendications précédentes, dans laquelle la paroi amont (230) présente globalement une épaisseur égale à 10% près ou supérieure à l'épaisseur de la paroi aval (218).

7. Turbomachine à gaz selon l'une quelconque des revendications précédentes, dans laquelle un dit secteur (218b) de la paroi aval recouvre (254) un secteur circonférentiellement adjacent (218a) de la paroi aval.

8. Turbomachine à gaz selon la revendication 7, dans laquelle au moins une déformation circonférentielle à chaud desdits secteurs de la paroi aval, considérés individuellement, est prédéfinie et le recouvrement circonférentiel (254) par un dit secteur d'un dit secteur adjacent de la paroi aval (218) est supérieur à ladite déformation prédéfinie.

9. Turbomachine à gaz selon l'une quelconque des revendications précédentes, dans laquelle deux dites ouvertures (221,219), respectivement de la paroi amont (230) et de la paroi aval (218), de montage d'un dit dispositif (220) d'injection de carburant sont coaxiales, chaque ouverture (221) de la paroi amont (230) présentant un axe (222a) par rapport auquel un dit secteur (218a) de la paroi aval (218) est circonférentiellement centré.

10. Turbomachine à gaz selon les revendications 7 et 9, dans laquelle des orifices (236,238) de fixation par vissage de la paroi amont (230) avec les parois interne et externe sont angulairement situés en regard des recouvrements circonférentiels (254).

11. Turbomachine à gaz selon la revendication 2, seule ou en combinaison avec l'une quelconque des revendications 3 à 10, dans laquelle la paroi aval (218) est précontrainte radialement, assurant ainsi une étanchéité entre les rebords annulaires amont respectifs de ladite paroi aval (218) et de la paroi amont (230), au niveau desdites périphéries interne et externe.

12. Turbomachine à gaz selon l'une quelconque des revendications précédentes, dans laquelle la paroi amont (230) et la paroi aval (218) comprennent chacune des passages (139,239,243) d'air qui les traversent.

## Patentansprüche

1. Gasturbinentriebwerk mit einer Brennkammer (10), wobei die Brennkammer enthält:
- zwei Wände, nämlich eine Innenwand (14) und eine Außenwand (16),
- einen Kammerboden (210) mit einer vorderen Wand (230) und einer hinteren Wand (218), die sich zwischen der Innen- und der Außenwand erstrecken und jeweils Öffnungen (221, 219) zur Montage von Treibstoffeinspritzvorrichtungen (220) zum Einspritzen von Treibstoff durch die Öffnungen aufweisen, wobei die hintere Wand sektorisiert ist (218a, 218b),
wobei zur Anlage an der vorderen Wand (230) die hintere Wand (218) enthält:
- am Außenumfang eine vordere ringförmige Randkante (232), die stromaufwärts gerichtet ist, und
- am Innenumfang eine vordere ringförmige Randkante (234), die stromaufwärts gerichtet ist,
**dadurch gekennzeichnet, dass** die hintere Wand (218) unter Vorspannung an der vorderen Wand (230) anliegt und die vordere Wand (230) mit der Innenwand (14) und der Außenwand (16) verschraubt ist und enthält:
- am Außenumfang eine vordere Randkante (233), die stromaufwärts gerichtet ist, zur Befestigung an ein vorderes Ende der Außenwand (16) und,
- am Innenumfang eine vordere Randkante (235), die stromaufwärts gerichtet ist, zur Befestigung an ein vorderes Ende der Innenwand (14).

2. Gasturbinentriebwerk nach Anspruch 1, wobei
- das Triebwerk eine Achse (223) aufweist,
- die am Außenumfang der hinteren Wand (218) liegende, vordere ringförmige Randkante (232) radial zu der Achse (223) verspannt an einer zylindrischen Außenfläche der am Außenumfang der vorderen Wand (230) liegenden, vorderen ringförmigen Randkante (235) anliegt, und
- die am Innenumfang der hinteren Wand (218) liegende, vordere ringförmige Randkante (234) verspannt an einer zylindrischen Innenfläche der am Innenumfang der vorderen Wand (230) liegenden, vorderen ringförmigen Randkante (235) anliegt.

3. Gasturbinentriebwerk nach einem der vorhergehenden Ansprüche,
wobei die ringförmigen Randkanten zylindrisch ausgebildet sind.

4. Gasturbinentriebwerk nach einem der vorhergehenden Ansprüche,
wobei die vordere (230) und die hintere (218) Wand aus Metall bestehen.

5. Gasturbinentriebwerk nach einem der vorhergehenden Ansprüche,
wobei die hintere Wand (218) einen Wärmeschutz für die vordere Wand (230) definiert, wobei die vordere Wand strukturgebend für die Brennkammer ist.

6. Gasturbinentriebwerk nach einem der vorhergehenden Ansprüche,
wobei die vordere Wand (230) insgesamt eine Dicke aufweist, die auf 10% genau der Dicke der hinteren Wand (218) entspricht oder größer ist.

7. Gasturbinentriebwerk nach einem der vorhergehenden Ansprüche,
wobei ein Sektor (218b) der hinteren Wand einen in Umfangsrichtung benachbarten Sektor (218a) der hinteren Wand überdeckt (254).

8. Gasturbinentriebwerk nach Anspruch 7,
wobei zumindest eine umlaufende Warmumformung der einzelnen Sektoren der hinteren Wand vorgegeben ist und die umlaufende Überdeckung (254) eines Sektors der hinteren Wand (218) durch einen benachbarten Sektor größer ist als die vorgegebene Umformung.

9. Gasturbinentriebwerk nach einem der vorhergehenden Ansprüche,
wobei zwei jeweilige Öffnungen (221, 219) der vorderen Wand (230) und der hinteren Wand (218) zur Montage einer Treibstoffeinspritzvorrichtung (220) koaxial verlaufen, wobei jede Öffnung (221) der vorderen Wand (230) eine Achse (222a) aufweist, in Bezug auf die ein Sektor (218a) der hinteren Wand (218) in Umfangsrichtung zentriert ist.

10. Gasturbinentriebwerk nach den Ansprüchen 7 und 9,
wobei den umlaufenden Überdeckungen (254) winkelmäßig gegenüberliegend Bohrungen (236, 238) zur Schraubbefestigung der vorderen Wand (230) mit der Innen- und der Außenwand angeordnet sind.

11. Gasturbinentriebwerk nach Anspruch 2, allein oder in Kombination mit einem der Ansprüche 3 bis 10,
wobei die hintere Wand (218) radial vorgespannt ist und so eine Abdichtung zwischen den jeweiligen vorderen ringförmigen Randkanten der hinteren Wand (218) und der vorderen Wand (230) im Bereich des Innen- und des Außenumfangs gewährleistet.

12. Gasturbinentriebwerk nach einem der vorhergehenden Ansprüche,
wobei die vordere Wand (230) und die hintere Wand (218) jeweils Luftdurchlässe (139, 239, 243) umfassen, die durch sie hindurchgehen.

## Claims

1. A gas turbomachine having a combustion chamber (10), the combustion chamber comprising:
- two walls which are inner wall (14) and outer wall (16), respectively,
- a chamber bottom (210) comprising an upstream wall (230) and a downstream wall (218) extending between said inner and outer walls and comprising mounting openings (221, 219) for mounting fuel injection devices (220) for injecting fuel through said openings, the downstream wall being sectorised (218a, 218b),
for support on the upstream wall (230), the downstream wall (218) comprises:
- at an outer periphery, an upstream facing annular flange (232), and,
- at an inner periphery, an upstream facing annular flange (234),
**characterised in that** the downstream wall (218) bears under radial prestress on the upstream wall (230) and the upstream wall (230) is screwed with the inner wall (14) and outer wall (16) and comprises:
- at an outer periphery, an upstream facing annular flange (233) for attachment to an upstream end of the outer wall (16), and
- at an inner periphery, an upstream facing annular flange (235) for attachment to an upstream end of the inner wall (14).

2. Gas turbomachine according to claim 1, wherein:
- the turbomachine has a general axis (223),
- the upstream annular flange (232) at the outer periphery of the downstream wall (218) is tightly seated radially to said axis (223) on an outer cylindrical surface of the upstream annular flange (233) at the outer periphery of the upstream wall (230), and
- the upstream annular flange (234) on the inner periphery of the downstream wall (218) is tightly seated on an inner cylindrical surface of the upstream annular flange (235) at the inner periphery of the upstream wall (230).

3. Gas turbomachine according to any one of the preceding claims, wherein the annular flanges are cylindrical.

4. Gas turbomachine according to any one of the preceding claims, wherein the upstream (230) and downstream (218) walls are metallic.

5. Gas turbomachine according to any one of the preceding claims, wherein the downstream wall (218) defines thermal protection for the upstream wall (230), said upstream wall being structural for the combustion chamber.

6. Gas turbomachine according to any one of the preceding claims, wherein the upstream wall (230) has an overall thickness equal to about 10% or more of the thickness of the downstream wall (218).

7. Gas turbomachine according to any one of the preceding claims, wherein a said sector (218b) of the downstream wall (254) overlaps a circumferentially adjacent sector (218a) of the downstream wall.

8. Gas turbomachine according to claim 7, wherein at least one circumferential deformation of said downstream wall sectors, considered individually and hot, is predefined and the circumferential overlap (254) by one said sector of an adjacent said downstream wall sector (218) is greater than said predefined deformation.

9. Gas turbomachine according to any one of the preceding claims, wherein two said openings (221, 219) respectively in the upstream wall (230) and the downstream wall (218) for mounting a said fuel injection device (220) are coaxial, each opening (221) in the upstream wall (230) having an axis (222a) with respect to which a said sector (218a) of the downstream wall (218) is circumferentially centred.

10. Combustion chamber according to claims 7 and 9, wherein holes (236, 238) for screw fastening of the upstream wall (230) to the inner wall and the outer wall are angularly located opposite the circumferential overlaps (254).

11. Gas turbomachine according to claim 2, alone or in combination with any one of claims 3 to 10, wherein the downstream wall (218) is radially prestressed, thereby providing a seal between the respective upstream annular flanges of said downstream wall (218) and the upstream wall (230), at said inner periphery and outer periphery.

12. Gas turbomachine according to any one of the preceding claims, wherein the upstream wall (230) and the downstream wall (218) each include air passages (139, 239, 243) extending there through.
